# EUROPEAN PATENT APPLICATION

(11) **EP 2 612 756 A1**
(43) Date of publication of application: **10.07.2013**
(21) Application number: 11821920.3
(22) Date of filing: 01.09.2011
(51) Int. Cl.: B32B 27/30, C08F 220/26, C08J 7/04

(54) **HARD COAT FILM AND FRONT SURFACE PROTECTIVE PLATE**

(30) Priority: 02.09.2010 JP 2010196432
(71) Applicant: Mitsubishi Rayon Co., Ltd., Tokyo 100-8253 (JP)
(72) Inventor: NABESHIMA, Yasuhiko, Otake-shi Hiroshima 739-0693 (JP); SHOUJI, Keiko, Otake-shi Hiroshima 739-0693 (JP); FUNAMI, Eita, Otake-shi Hiroshima 739-0693 (JP)
(74) Representative: Ter Meer Steinmeister & Partner
(86) International application number: PCT/JP2011/069901
(87) International publication number: WO 2012/029905

(57) **Abstract**

A hard coat film being good in appearance, transparency, impact resistance, and scratch resistance or surface hardness is described. The hard coat film is formed by laminating a hard coating on at least one surface of a substrate film. The substrate film includes a polymer (C) including a first repeating unit derived from a di(meth)acrylate (A) and a second repeating unit derived from a mono(meth)acrylate (B), wherein the first repeating unit derived from the di(meth)acrylate (A) is represented by formula (1): 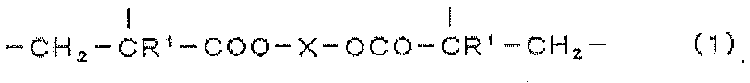 In formula (1), X represents at least one diol residue with a number-average molecular weight of 500 or more selected from polyalkylene glycol residues, polyester diol residues and polycarbonate diol residues, and R¹ represents H or CH₃.

## Description

### Technical Field

This invention relates to a hard coat film and a front protective sheet.

### Background Art

The hard coat film having a hard coating laminated on a substrate film is applied to various display elements such as liquid crystal display (LCD) panels, plasma display panels and car navigation display panels, and to the touch panel films of personal data assistants and so on. The substrate film of the above hard coat film is a transparent film, such as a polyester film, a polycarbonate film, a polymethylmethacrylate film, a triacetylcellulose film or a polyolefin film, etc.

Moreover, the hard coating of the above hard coat film is a coating having good scratch resistance and wear resistance, such as a coating formed by curing an active-energy-ray-curable composition that contains a multi-functional (meth)acryl compound. When the raw material for forming the hard coating is a composition containing a multi-functional (meth)acryl compound and the substrate film is a polyester film, a polycarbonate film, a triacetylcellulose film or a polyolefin film, there is a refractive index difference between the hard coating and the substrate film.

Therefore, when the hard coat film is applied to optical uses such as touch panels and so on, reflection and diffraction of light are caused between the substrate film and the hard coating due to the refractive index difference between them, so that the transparency of the hard coat film and the visibility of the images and so on under the hard coat film are lowered. Moreover, when a film having a large birefringence, such as a polyester film or a polycarbonate film, is used as the substrate film, luminance spots appear in the hard coat film, and the visibility of the images under the hard coat film is lowered even more.

To solve the above problems, for example, Patent Document 1 reports a scratch-resistant acryl resin film, which is formed by curing a curable coating material to form a scratch-resistant coating, on a surface of an acryl resin film that includes an acryl resin layer with rubber particles dispersed in a methacryl resin and has a thickness of 100 to 1800 µm. However, because rubber particles are dispersed in the methacryl resin in the acryl resin film of Patent Document 1, bad appearances such as fisheyes and die lines easily occur. Hence, a hard coat film, which does not contain particulate material such as rubber particles, is good in appearance, scratch-resistance and impact resistance or surface hardness, and has high transparency, is desired.

### Citation List

### Patent Document

[Patent Document 1] Japanese Patent Publication No. 2004-143365

### Summary of Invention

### Technical Problem

Accordingly, this invention provides a hard coat film that is good in appearance, transparency, impact resistance, and scratch resistance or surface hardness.

### Solution to Problem

The hard coat film of this invention is formed by step comprising; laminating a hard coating on at least one surface of a substrate film, wherein the substrate film comprises a polymer (C) including a first repeating unit derived from a di(meth)acrylate (A) and a second repeating unit derived from a mono(meth)acrylate (B), and the first repeating unit derived from the di(meth)acrylate (A) is represented by formula (1):

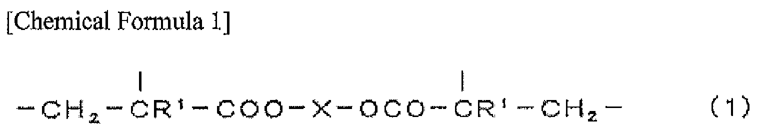

In formula (1), X represents at least one diol residue with a number-average molecular weight of 500 or more selected from polyalkylene glycol residues, polyester diol residues and polycarbonate diol residues, and R¹ represents H or CH₃.

This invention also provides a front protection sheet including the above hard coat film.

### Advantageous Effects of Invention

Because the hard coat film of this invention is good in appearance, transparency, impact resistance, and scratch-resistance or surface hardness, it is suitably applied to various displays such as LCD panels, plasma display panels and car navigation display panels, and to the touch panel films of personal data assistants and so on. The hard coat film of this invention can be used as a front protection sheet of various display elements, personal data assistants and so on.
In order to make the aforementioned and other objects, features and advantages of this invention comprehensible, preferred embodiments are described in detail below.

### Description of Embodiments

This invention is further described below. In this invention, "(meth)acrylate" means one or both of "acrylate" and "methacrylate".

### <Repeating Unit Derived from Di(meth)acrylate (A)>

In this invention, the repeating unit derived from the di(meth)acrylate (A) is represented by formula (1), and is one of the constituting units of the polymer (C) for forming the substrate film. The repeating unit derived from the di(meth)acrylate (A) is introduced in the polymer by polymerizing the monomer represented by formula (2):

[Chemical Formula 2]

CH₂=CR¹-COO-X-OCO-CR¹=CH₂ (2)

In formula (2), X represents at least one diol residue with a number-average molecular weight (Mn) of 500 or more selected from polyalkylene glycol residues, polyester diol residues and polycarbonate diol residues, and R¹ represents H or CH₃.

The repeating unit derived from the di(meth)acrylate (A) is intended to improve the transparency and the impact resistance of the hard coat film of this invention. By incorporating the repeating unit derived from the di(meth)acrylate (A), a quite flexible crosslinlced structure of long-chain molecules can be introduced in the polymer (C).

The Mn of the diol residue in formula (1) is preferably from 500 to 10000, more preferably from 600 to 3000. By setting the Mn of the diol residue above 500, the impact resistance of the hard coat film of this invention can be improved. Moreover, in consideration of the transparency of the hard coat film of this invention, the Mn of the diol residue is preferably 10000 or less.

When the hard coat film of this invention is applied to optical members, X is preferably a polyalkylene glycol residue having a high hydrophobicity, especially a polybutylene glycol residue having a particularly high hydrophobicity.

The structure of X may include a repetition of a single constituting unit, or a repetition of two or more constituting units. When the structure of X includes a repetition of two or more constituting units, the constituting units may be arranged in a random manner, a block manner or an alternate manner.

Examples of the di(meth)acrylate (A) as the raw material of the repeating unit derived from the di(meth)acrylate (A) include: polyethylene glycol di(meth)acrylates having a repeating unit number of 12 or more, such as dodecaethylene glycol di(meth)acrylate, tridecaethylene glycol di(meth)acrylate, tetradecaethylene glycol di(meth)acrylate, pentadecaethylene glycol di(meth)acrylate and hexadecaethylene glycol di(meth)acrylate; polypropylene glycol di(meth)acrylates having a repeating unit number of 9 or more, such as nonapropylene glycol di(meth)acrylate, decapropylene glycol di(meth)acrylate, undecapropylene glycol di(meth)acrylate, dodecapropylene glycol di(meth)acrylate and tridecapropylene glycol di(meth)acrylate; and polybutylene glycol dimethacrylates having a repeating unit number of 7 or more, such as heptabutylene glycol di(meth)acrylate, octabutylene glycol di(meth)acrylate, nonabutylene glycol di(meth)acrylate, decabutylene glycol di(meth)acrylate and undecabutylene glycol di(meth)acrylate. These compounds can be used alone or in combination of two or more.

Specific examples of the di(meth)acrylate (A) include, by the trade names, Acryl Ester PBOM (polybutylene glycol dimethacrylate with Mn of X being 648) produced by Mitsubishi Rayon; Blemmer PDE-600 (polyethylene glycol dimethacrylate with Mn of X being 616), Blemmer PDP-700 (polypropylene glycol dimethacrylate with Mn of X being 696), Blemmer PDT-650 (poly-1,4-butylene glycol di(meth)acrylate with Mn of X being 648), Blemmer 40PDC1700B (dimethacrylate of a random copolymer of ethylene glycol and propylene glycol with Mn of X being 1704) and Blemmer ADE-600 (polyethylene glycol diacrylate with Mn of X being 616) produced by NOF Corporation; and NK Ester A-600 (polyethylene glycol diacrylate with Mn of X being 616), NK Ester A-1000 (polyethylene glycol diacrylate with Mn of X being 1012), NK Ester APG-700 (polypropylene glycol diacrylate with Mn of X being 696), NK Ester 14G (polyethylene glycol dimethacrylate with Mn of X being 616) and NK Ester 23G (polyethylene glycol dimethacrylate with Mn of X being 1012) produced by Shin-Nakamura Chemical Co.

### <Repeating Unit Derived from Mono(meth)acrylate (B)>

In this invention, the repeating unit derived from the mono(meth)acrylate (B) is also one of the constituting units of the polymer (C) for forming the substrate film. The repeating unit derived from the mono(meth)acrylate (B) is introduced in the polymer (C) for improving the surface hardness of the hard coat film of this invention.

Examples of the mono(meth)acrylate (B) as the raw material of the repeating unit derived from the mono(meth)acrylate (B) include: alkyl (meth)acrylates, such as methyl (meth)acrylate, ethyl (meth)acrylate, *n*-butyl (meth)acrylate, isobutyl (meth)acrylate, *t*-butyl (meth)acrylate, *n*-propyl (meth)acrylate, isopropyl (meth)acrylate, 2-ethylhexyl (meth)acrylate and lauryl (meth)acrylate; aromatic (meth)acrylates, such as phenyl (meth)acrylate and benzyl (meth)acrylate; and alicyclic (meth)acrylates, such as isobornyl (meth)acrylate, methylcyclohexyl (meth)acrylate, *t*-butylcyclohexyl (meth)acrylate, 1-admantyl (meth)acrylate, 2-methyl-2-admantyl (meth)acrylate and 2-ethyl-2-admantyl (meth)acrylate. These compounds can be used alone or in combination of two or more. In view of the transparency of the hard coat film of this invention, methyl methacrylate is preferred among these compounds.

In this invention, if required, the polymer (C) may further contains a repeating unit derived from other vinyl monomer, in addition to the repeating unit derived from the di(meth)acrylate (A) and that derived from the mono(meth)acrylate (B). Examples of other vinyl monomer include aromatic vinyl monomers, such as styrene, α-methylstyrene; monovinyl monomers, such as vinyl monomers containing a nitrile group, such as acrylonitrile and methacrylonitrile; and polyvinyl monomers other than the di(meth)acrylate (A), such as ethylene glycol di(meth)acrylate. These compounds can be used alone or in combination of two or more.

Examples of the method of forming the polymer (C) include bulk polymerization, solution polymerization, emulsion polymerization and suspension polymerization. It is also possible to use arbitrary one of active-energy-ray polymerization, thermal polymerization, and a combination of active-energy-ray polymerization and thermal polymerization.

### [Monomer Material (c)]

In the monomer material [called "monomer material (c)", hereinafter] for forming the polymer (C), a polymerization initiator, such as a photo-polymerization initiator or a thermo-polymerization initiator, is added.

Examples of the photo-polymerization initiator include: 1-hydroxy-cyclohexyl phenyl ketone, 2-hydroxy-2-methyl-1-phenylpropane-1-one, hydroxycyclohexyl phenyl ketone, methyl phenyl glyoxylate, acetophenone, benzophenone, diethoxyacetophenone, 2,2-dimethoxy-2-phenylacetophenone, 1-phenyl-1,2-propanedione-2-(o-ethoxycarbonyl)oxime, 2-methyl[4-(methylthio)phenyl]-2-N-morpholino-1-propanone, benzil, benzoin methyl ether, benzoin ethyl ether, benzoin isopropyl ether, benzoin isobutyl ether, 2-chlorothioxanthone, isopropylthioxanthone, 2,4,6-trimethylbenzaylphenylphosphine oxide, benzoyldiphenylphosphine oxide, 2-methylbenzoyldiphenylphosphine oxide and benzoyldimethoxyphosphine oxide. These compounds can be used alone or in combination of two or more.

Examples of the thermo-polymerization initiator include: organic peroxide polymerization initiators, such as benzoyl peroxide, lauroyl peroxide, t-butylperoxy isobutyrate, *t*-butylperoxy-2-ethyl hexanoate, *t*-butylperoxy neodecanoate, *t*-hexylperoxy pivalate, diisopropylperoxy dicarbonate and bis(4-*t*-butylcyclohexyl)peroxy dicarbonate; and azo-series polymerization initiators, such as 2,2'-azobisisobutyronitrile, 2,2'-azobis(2,4-dimethylvaleronitrile) and 2,2'-azobis(4-methoxy-2,4-dimethylvaleronitrile). These compounds can be used alone or in combination of two or more.

The addition amount of the polymerization initiator in the monomer material (c) is preferably 0.005 to 5 parts by weight, more preferably 0.01 to 1 part by weight and particularly preferably 0.05 to 0.5 part by weight, relative to 100 parts by weight of the monomer material (c). When the addition amount of the polymerization initiator is 5 parts by weight or less, coloring of the polymer (C) can be inhibited. When the addition amount of the polymerization initiator is 0.005 part by weight or more, the polymerization time is not overly long, and is a suitable polymerization time.

### [Syrup-like Material (c')]

In this invention, it is also possible to use, as the monomer raw-material (c), a syrup-like material (c') formed by dissolving, in a first monomer mixture containing the di(meth)acrylate (A) and the mono(meth)acrylate (B), a copolymer formed by polymerizing a part of a second monomer mixture having the same composition as the first monomer mixture.

The viscosity of the syrup-like material (c') is preferably 10 to 10,000 mPa·s, more preferably 100 to 8,000 mPa·s and particularly preferably 300 to 6,000 mPa·s.

The syrup-like material (c') may be prepared by polymerizing a part of the monomers in the above monomer raw-material (c). Hereinafter, this method is called "syrup preparation method 1". An exemplary method for preparing the syrup-like material (c') is described below. A di(meth)acrylate (A), a mono(meth)acrylate (B), other monomer (if required) and a chain transfer agent are loaded in a reactor equipped with a cooling tube, a thermometer and a stirrer, and heating is started while the mixture is stirred. While the mixture reaches a predetermined temperature, a polymerization initiator is added. The temperature in the reactor is maintained constant for a predetermined period of time to run the polymerization, and then the mixture is rapidly cooled to about room temperature, possibly by depressurization cooling, to stop the polymerization.

Examples of the polymerization initiator used in the syrup-like material (c') are the same as those of the polymerization initiator used in the monomer raw-material (c). Moreover, the addition amount of the polymerization initiator is, for example, about 0.01 to 0.5 part by weight relative to 100 parts by weight of the total amount of the monomer mixture in the syrup-like material (c')

In preparing the syrup-like material (c'), if required, a chain transfer agent can be added to prevent crosslinking gelation of the polymer. Examples of the chain transfer agent include alkylmercaptanes, such as *n*-butylmercaptane, *n*-dodecylmercaptane and *n*-octylmexcaptane. The addition amount of the chain transfer agent is preferably 0.01 to 10 parts by weight and more preferably 0.05 to 5 parts by weight, relative to 100 parts by weight of the total amount of the monomer mixture. When the addition amount of the chain transfer agent is 0.01 part by weight or more, gelation of the syrup-like material (c') is inhibited. When the addition amount of the chain transfer agent is 10 parts by weight or less, the viscosity of the syrup-like material (c') is proper.

In this invention, if required, a polymerization inhibitor can be added to prevent coloring or natural curing of the syrup-like material (c'). Examples of the polymerization inhibitor include hydroquinone, hydroquinone monomethyl ether, 2,6-di-*t*-butyl-4-methylphenol and 2,4-dimethyl-6-t-butylphenol. These compounds can be used alone or in combination of two or more.

Moreover, the syrup-like material (c') can be prepared by adding, in the above monomer mixture, a copolymer obtained from a monomer mixture or the like with the same composition of the above monomer mixture. This method is sometimes called "syrup preparation method 2" hereafter. In an exemplary method, a (meth)acrylate polymer dissolvable in a monomer mixture of the di(meth)acrylate (A) and the mono(meth)acrylate (B) is dissolved in the monomer mixture to obtain the syrup-like material (c'). The (meth)acrylate polymer is, for example, a polyalkyl (meth)acrylate obtained by polymerizing one or more alkyl (meth)acrylates selected from methyl (meth)acrylate, ethyl (meth)acrylate, *n*-butyl (meth)acrylate, *i*-butyl (meth)acrylate and *t*-butyl (meth)acrylate, etc. These (meth)acrylates can be used alone or in combination of two o more. If required, the (meth)acrylate polymer may further contain a monomer unit other than the repeating unit derived from the alkyl (meth)acrylate. It is noted that in this invention, the scope of the term "polymerization" includes both of "homo-polymerization" and "co-polymerization".

In this invention, if required, a release agent can be added in the monomer raw-material (c). The addition amount of the release agent is preferably 0.005 to 0.5 part by weight relative to 100 parts by weight of the monomer raw-material (c). When the addition amount of the release agent is 0.005 part by weight or more, in peeling the substrate film from a die, such as a polyethyleneterephthalate (PET) film or a stainless plate, etc., the release property is good. When the addition amount of the release agent is 0.5 part by weight or less, the moisture absorptivity and the surface state of the hard coat film of this invention are good.

Examples of the release agent include: SOLUSOL (registered trademark) 100% Cosmetic Grade Surfactant (trade name, sodium di(2-ethylhexyl) sulfosuccinate) produced by Nihon Cytec Industries Co., Ltd., and JP-502 (trade name, a mixture of 50 mol% of diethyl phosphate and 50 mol% of monoethyl phosphate) produced by Johoku Chemical Co., Ltd.

### <Polymer (C)>

In the hard coat film of this invention, the polymer (C) contains the repeating unit derived from the di(meth)acrylate (A) and that derived from the mono(meth)acrylate (B) to constitute the substrate film, and is a component responsible for the transparency and the impact-resistance of the hard coat film.

In consideration of the impact-resistance, the content of the di(meth)acrylate (A) unit in the polymer (C) is preferably 10 to 90 wt%, more preferably 20 to 80 wt% and particularly preferably 30 to 70 wt%. When the content of the di(meth)acrylate (A) unit is 10 wt% or more, the impact-resistance of the hard coat film of this invention is good. On the other hand, when the content of the di(meth)acrylate (A) unit is 90 wt% or less, reduction of the strength of the hard coat film of this invention is inhibited.

In consideration of the strength of the hard coat film of this invention, the content of the mono(meth)acrylate (B) unit in the polymer (C) is preferably 10 to 90 wt%, more preferably 20 to 80 wt% and particularly preferably 30 to 70 wt%. When the content of the mono(meth)acrylate (B) unit is 10 wt% or more, the strength of the hard coat film of this invention is good. On the other hand, when the content of the mono(meth)acrylate (B) unit is 90 wt% or less, reduction of the impact-resistance of the hard coat film of this invention is inhibited.

Moreover, the impact-resistance and the surface hardness of the hard coat film of this invention have a trade-off relationship, and are affected by the composition of the polymer (C) and the composition and thickness of the hard coating. Hence, when the impact-resistance of the hard coat film of this invention is considered imortant, a higher content of the di(meth)acrylate (A) unit in the polymer (C) is preferred. On the other hand, when the surface hardness of the hard coat film of this invention is considered important, a lower content of the di(meth)acrylate (A) unit in the polymer (C) is preferred.

### <Substrate Film>

In this invention, the substrate film contains the polymer (C). If required, various additives, such as lubricant, plasticizer, antibacterial agent, antimycotic agent, light stabilizer, UV absorbent, bluing agent, dye, antistatic agent and thermal stabilizer, can be added in the substrate film.

An exemplary method for forming the substrate film is the following batch-type casting polymerization method. First, two dies having mirror surfaces and unevenness on the surfaces of stainless plate or glass plate, etc., are arranged oppositely with a predetermined distance between them, a hollow object formed from a polymer, such as soft polyvinyl chloride, ethylene-vinyl acetate copolymer, polyethylene or ethylene-methyl methacrylate copolymer, is inserted as a gasket between the edges of the two dies, and the resulting structure is fixed by a clamp to form a casting mould. Next, the monomer raw-material (c) is injected into the casting mould and polymerized, and then the resulting polymer is taken out of the casting mould to obtain a substrate film.

Another exemplary method for forming the substrate film is the following continuous casting polymerization method. Two films, such as two PET films, are arranged oppositely and moved with a predetermined distance between them to serve as dies, and the gasket is moved at two sides of the dies to form a casting mould. The upstream of the moving casting mould is an injection part for the monomer raw-material (c), and the downstream of the same is an polymerization part. The syrup-like material (c') is injected from the upstream of the casting mould, and the dies are heated and light-irradiated from their upper surface and/or the lower surface at the downstream of the casting mould to polymerize the monomer raw-material (c). The obtained polymer is peeled off from the dies to obtain a substrate film. Moreover, when the viscosity of the syrup-like material (c') is 100 to 8,000 mPa·s, the substrate film is obtained with a good precision in its thickness.

### <Hard Coating>

In this invention, the hard coating is laminated on at least one surface of the substrate film.

An example of the raw material for forming the hard coating is an active-energy-ray-curable resin composition (E), which includes a multi-functional (meth)acryl compound (D) having two or more (meth)acryloyl groups in one molecule, and a photo-polymerization initiator. Examples of the multi-functional (meth)acryl compound (D) include a esterfied compound obtained from one mole of polyvalent alcohol and two or more moles of (meth)acrylic acid or its derivative, and a linear esterfied compound obtained from a polyvalent carboxylic acid or its anhydride, a polyvalent alcohol, and (meth)acrylic acid or its derivative.

Examples of the esterfied compound obtained from 1 mole of polyvalent alcohol and 2 or more moles of (meth)acrylic acid or its derivative include polyethylene glycol di(meth)acrylates, such as diethylene glycol di(meth)acrylate, triethylene glycol di(meth)acrylate and tetraethylene glycol di(meth)acrylate; 1,4-butanediol di(meth)acrylate, 1,6-hexanediol di(meth)acrylate and 1,9-nonanediol di(meth)acrylate; trimethylolpropane tri(meth)acrylate and trimethylolethane tri(meth)acrylate; pentaglycerol tri(meth)acrylate, pentaerythritol tri(meth)acrylate and pentaerythritol tetra(meth)acrylate; glycerin tri(meth)acrylate; dipentaerythritol tri(meth)acrylate, dipentaerythritol tetra(meth)acrylate, dipentaerythritol penta(meth)acrylate and dipentaerythritol hexa(meth)acrylate; and tripentaerythritol tetra(meth)acrylate, tripentaerythritol penta(meth)acrylate, tripentaerythritol hexa(meth)acrylate and tripentaerythritol hepta(meth)acrylate.

As for the linear esterfied compound obtained from a polyvalent carboxylic acid or its anhydride, a polyvalent alcohol, and (meth)acrylic acid or its derivative, examples of the combination of the polyvalent carboxylic acid or its anhydride, the polyvalent alcohol and (meth)acrylic acid ("polyvalent carboxylic acid or its anhydride/polyvalent alcohol/(meth)acrylic acid") include: malonic acid/trimethylolethane/(meth)acrylic acid, malonic acid/trimethylolpropane/(meth)acrylic acid, malonic acid/glycerin/(meth)acrylic acid and malonic acid/glycerin/(meth)acrylic acid, malonic acid/pentaerythritol/(meth)acrylic acid; succinic acid/trimethylolethane/(meth)acrylic acid, succinic acid/trimethylolpropane/(meth)acrylic acid, succinic acid/glycerin/ (meth)acrylic acid and succinic acid/pentaerythritol/(meth)acrylic acid; adipic acid/ trimethylolethanel/(meth)acrylic acid, adipic acid/trimethylolpropane/(meth)acrylic acid, adipic acid/glycerin/(meth)acrylic acid, and adipic acid/pentaerythritol/(meth)acrylic acid; glutaric acid/trimethylolethane/(meth)acrylic acid, glutaric acid/trimethylolpropane/ (meth)acrylic acid, glutaric acid/glycerin/(meth)acrylic acid, and glutaric acid/ pentaerythritol/(meth)acrylic acid; sebacic acid/trimethylolethane/(meth)acrylic acid, sebacic acid/trimethylolpropane/(meth)acrylic acid, sebacic acid/glycerin(meth)acrylic acid, and sebacic acid/ pentaerythritol/(meth)acrylic acid; fumaric acid/trimethylolethane/(meth)acrylic acid, fumaric acid/trimethylolpropane/ (meth)acrylic acid, fumaric acid/glycerin/ (meth)acrylic acid, and fumaric acid/pentaerythritol/(meth)acrylic acid; itaconic acid/trimethylolethane/(meth)acrylic acid, itaconic acid/trimethylolpropane/(meth)acrylic acid, itaconic acid/glycerin/(meth)acrylic acid, and itaconic acid/pentaerythritol/(meth)acrylic acid; and maleic anhydride/trimethylolethane/(meth)acrylic acid, maleic anhydride/trimethylolpropane/(meth)acrylic acid, maleic anhydride/glycerin/(meth)acrylic acid, and maleic anhydride /pentaerythritol/(meth)acrylic acid.

Examples of the above multi-functional (meth)acryl compounds other than the multi-functional (meth)acryl compound (D) include: urethane (meth)acrylate obtained by reacting, with a polyisocyanate obtained by multimerizing (e.g., trimerizing) a diisocyanate such as trimethylolpropanetoluylenediisocyanate, hexamethylenediisocyanate, tolylenediisocyanate, diphenylmethanediisocyanate, xylenediisocyanate, 4,4'-methylenebis(cyclohexylisocyanate), isophoronediisocyanate or trimethylhexamethylenediisocyanate, an equimolar amount of the isocyanate group or more of a (meth)acrylate having reactive hydrogen, such as 2-hydroethyl (meth)acrylate, 2-hydropropyl (meth)acrylate, 2-hydroxy-3-methoxypropyl (meth)acrylate, N-methylol(meth)acrylamide, N-hydroxy(meth)acrylamide, 1,2,3-propanetriol-1,3-di(meth)acrylate or 3-acryloyloxy-2-hydroxypropyl (meth)acrylate; poly[(meth)acryloyloxyethylene]isocyanurate such as di(meth)acrylate or tri(meth)acrylate of tris(2-hydroxyethyl)isocyanuric acid; and epoxypoly(meth)acrylate. These multi-functional (meth)acryl compounds can be used alone or in combination of two or more.

The photo-polymerization initiator has the function of polymerizing the multi-functional (meth)acryl compound (D) with light irradiation. Examples thereof include: carbonyl compounds, such as benzoin, benzoin methyl ether, benzoin ethyl ether, benzoin isopropyl ether, benzoin isobutyl ether, acetoin, butyroin, toluoin, benzyl, benzophenone, *p*-methoxybenzophenone, 2,2-diethoxyacetophenone, α,α-dimethoxy-α-phenylacetophenone, methyl phenylglyoxylate, ethyl phenylglyoxylate, 4,4'-bis(dimethylamino)benzophenone, 2-hydroxy-2-methyl-1-phenylpropane-1-one; sulfur compounds, such as tetramethylthiuram monosulfide and tetramethylthiuram disulfide; 2,4,6-trimethylbenzoyldiphenylphosphine oxide; and benzoyldiethoxyphosphine oxide. These compounds can be used alone or in combination of two or more.

In consideration of the curing property through the active energy ray, the addition amount of the photo-polymerization initiator is preferably not less than 0.1 part by weight, relative to 100 parts by weight of the multi-functional (meth)acryl compound (D). On the other hand, in consideration of maintaining a good color of the hard coating, the addition amount of the photo-polymerization initiator is preferably not more than 10 parts by weight, relative to 100 parts by weight of the multi-functional (meth)acryl compound (D).

If required, the active-energy-ray-curable resin composition (E) can further contain various components, such as a monomer having one functional group, a leveling agent, conductive inorganic particle, non-conductive inorganic particle, UV absorbent and light stabilizer. The addition amount of the various components can be suitably selected in the range not degrading the physical properties of the hard coating, such as approximately 10 wt% of the active-energy-ray-curable resin composition (E).

### <Hard Coat Film>

The hard coat film of this invention includes a hard coating laminated on at least one surface of a substrate film. The hard coat film preferably has a thickness of 50 to 500 *µ*m. When the thickness of the hard coat film is 50 *µ*m or more, the hard coat film can be obtained with a good thickness precision. When the thickness of the hard coat film is 500 *µ*m or less, the hard coat film can be suitably used as a hard coat film for optical applications. The hard coat film of this invention can be used as a front protection sheet of various display elements and personal data assistants.

In the hard coat film of this invention, the hard coating is preferably formed by curing the active-energy-ray-curable resin composition (E). Moreover, the thickness of the hard coating is preferably 1 to 20 *µ*m. The thickness of the hard coating affects the impact-resistance and the surface hardness. Hence, when the surface hardness of the hard coat film of this invention is considered important, the hard coating preferably has a larger thickness. On the other hand, when the impact-resistance of the hard coat film of this invention is considered important, the hard coating preferably has a smaller thickness.

Examples of the method for laminating the hard coating on the substrate film are as follows. In the lamination method 1, a material for forming the hard coating is directly coated on the substrate film and then cured. In the lamination method 2, the hard coating is laminated, during the fabrication of the substrate film through casting polymerization using the above casting mould, on the substrate film through the following steps (1) to (3) in sequence:
(1) coating a material for forming the hard coating on at least one inner surface of the casting mould and polymerize-curing the same to form the hard coating on at least one inner surface of the casting mould,
(2) injecting the monomer raw-material (c) in the cavity of the casting mould and polymerizing the same to obtain the polymer (C) (i.e., the substrate film), wherein the above hard coating is transferred to the substrate film,
(3) peeling off the hard coat film with the hard coating transferred to the substrate film, from the casting mould.

In this invention, when the active-energy-ray-curable resin composition (E) is used as a material for forming the hard coating, examples of the curing method include: curing the active-energy-ray-curable resin composition (E) by irradiating the same by an active energy ray in the air atmosphere, and curing the active-energy-ray-curable resin composition (E) while its coating film is covered by a film to block the air.

Examples of the active energy ray include UV ray and electron ray. When UV ray is used as the active energy ray, the source of the active energy ray is, for example, a UV lamp. Specific examples of the UV lamp include a high-pressure mercury lamp, a metal-halide lamp and a fluorescent UV lamp. The method of curing the active-energy-ray-curable resin composition (E) may be a single-stage curing method, or a multi-stage curing method including pre-curing, post-curing and so on.

On the hard coat film of this invention, at least one of various function layers, such as an adhesive layer, an anti-reflection function layer, an anti-glare layer and an anti-fouling layer, can be formed as a function layer on the surface of the hard coat film opposite to the surface formed with the hard coating.

### <Hard Coat Film with Adhesive Layer>

In a hard coat film with an adhesive layer, it is preferred that the hard coat film has a thickness of 50 to 500 *µ*m and the adhesive layer has a thickness of 50 to 300 *µ*m. For the adhesive layer, a thickness of 50 *µ*m or more makes a sufficient adhesive effect, and a thickness of 300 *µ*m or less make a proper transparency in optical applications.

An example of the material for forming the adhesive layer is an active-energy-ray-curable resin composition (H) that contains an acrylic acid derivative (F), a polymer (G) of an acrylic acid derivative, the di(meth)acrylate (A) and a photo-polymerization initiator.

The acrylic acid derivative (F) is selected from acrylic acid, methacrylic acid, and their derivatives. Examples thereof include the following compounds having one polymerizable unsaturated bond in the molecule: alkyl (meth)acrylates, such as methyl (meth)acrylate, *n*-butyl (meth)acrylate, *i*-butyl (meth)acrylate, 2-ethylhexyl (meth)acrylate, isononyl (meth)acrylate, *n*-octyl (meth)acrylate, lauryl (meth)acrylate and stearyl (meth)acrylate; aralkyl (meth)acrylates, such as benzyl (meth)acrylate; alkoxyalkyl (meth)acrylates, such as butoxyethyl (meth)acrylate; aminoalkyl (meth)acrylates, such as N,N-dimethylaminoethyl (meth)acrylate; (meth)acrylic acid esters of polyalkyleneglycol alkyl ether, such as (meth)acrylic acid ester of diethyleneglycol ethyl ether, (meth)acrylic acid ester of triethyleneglycol butyl ether, and (meth)acrylic acid ester of dipropyleneglycol methyl ether; (meth)acrylic acid esters of polyalkyleneglycol aryl ether, such as (meth)acrylic acid ester of hexaethyleneglycol phenyl ether; (meth)acrylic acid esters having an alicyclic group, such as cyclohexyl (meth)acrylate, dicyclopentanyl (meth)acrylate, isobornyl (meth)acrylate, and methoxylated cyclodecatriene (meth)acrylate; fluorinated alkyl (meth)acrylates, such as heptadecafluorodecyl (meth)acrylate; (meth)acrylic acid esters with hydroxyl, such as 2-hydroxyethyl (meth)acrylate, 3-hydroxypropyl (meth)acrylate, 4-hydroxybutyl (meth)acrylate, and glycerol (meth)acrylate; (meth)acrylic acid esters having a glycidyl group, such as glycidyl (meth)acrylate; and acrylic acid, methacrylic acid and acrylamide, etc. These compounds can be used alone or in combination of two or more.

The polymer (G) of acrylic acid derivative is a polymer obtained by polymerizing a compound having one polymerizable unsaturated bond in the molecule among the above acrylic acid derivatives. A compound having two or more polymerizable unsaturated bonds in the molecule may also copolymerized in the polymer (G), as long as the effect of this invention is not degraded. The weight-average molecular weight (defined as a value measured using a calibration curve of standard polystyrene through gel permeation chromatography) of the polymer (G) is preferably 100,000 to 700,000.

The amount of the polymer (G) of acrylic acid derivative in the active-energy-ray-curable resin composition (H) is preferably 10 to 60 wt%. When the amount of the polymer (G) is not less than 10 wt%, the polymerization/curing rate of the adhesive layer with the active energy ray is improved. When the amount of the polymer (G) is not more than 60 wt%, the material for forming the adhesive layer does not have an overly high viscosity, and can be easily handled.

The amount of the di(meth)acrylate (A) in the active-energy-ray-curable resin composition (H) is preferably 0.01 to 5 wt%. When the amount of the di(meth)acrylate (A) is not less than 0.01 wt%, the flowability of the adhesive layer is good, and the layer-like structure is easily maintained. On the other hand, when the amount is not more than 0.01 wt%, the crosslinking point of the cured material is suitable, and the adhesive effect of the adhesive layer is good.

The amount of the photo-polymerization initiator in the active-energy-ray-curable resin composition (H) is preferably 0.05 to 1 wt%. When the amount of the photo-polymerization initiator is not less than 0.05 wt%, the polymerization/curing rate is improved. When the amount is not more than 1 wt%, the optical performance of the adhesive layer is good without degradation.

The method for laminating the adhesive layer on the hard coat film may be, for example, the "lamination method 1" or the "lamination method 2" that is the same as the method for laminating the hard coating on the substrate film. Moreover, the curing method of the active-energy-ray-curable resin composition (H), the source of the active energy ray, and the irradiation method of the active energy ray may be the same as the curing method, the source of active energy ray, and the irradiation method, respectively, used in the case of the above active-energy-ray-curable resin composition (E).

### <Front Protection Sheet>

The front protection sheet of this invention is used, in a personal data assistant and so on, as a member for protecting the display window of liquid crystal or electroluminescence, etc. Such member needs certain strength to the impact from the outside, and the impact strength tends to be lowered when the sheet thickness is reduced. Particularly, a compact and slim design is recently more and more popular for personal data assistants, such as cellular phones and smart phones, and the thickness of the hard coat film used as the front protection sheet is required to be smaller and smaller.

Because the hard coat film of this invention combines appearance, transparency, impact-resistance and thinness and is good in scratch-resistance, it suitably serves as the front protection sheet of the display window or the like of a personal data assistant such as a cellular phone or a smart phone. Moreover, the hard coat film may also be used as various members in the fields requiring impact-resistance, transparency and thinness, such as, the front protection sheets of the finder parts of digital cameras and handy video cameras, and the front protection sheets of the display windows and so on of portable game machines and so on.

### Examples

This invention is further described with the following examples, wherein the term "part" means "weight part" and "%" means "wt%". Moreover, the evaluations of the hard coat film were implemented with the following methods.

### (1) YI-value

The YI-value was measured according to JIS K7103 to evaluate the appearance of the hard coat film.

### (2) Total Light Transmittance and Haze

The total light transmittance and the haze of the hard coat film were measure according to the measurement methods described in JIS K7361-1 using HAZE METER NDH2000 (trade name) manufactured by Nippon Denshoku Industries Co. Ltd.

### (3) Scratch-resistance

A circular pad of 25.4 mm in diameter mounted with a #000 steel wool was placed on the hard coat film, and was moved to scratch forth and back in a distance of 20 mm for 100 cycles under a load of 9.8 N. The difference (ΔHaze) between the haze-values before and after the scratch was calculated to evaluate the scratch-resistance property of the hard coat film, with the following equation: $\left[ΔHaze\left(%\right)\right] = \left[Haze\left(%\right) after scratch\right] - \left[Haze\left(%\right) before scratch\right]$

### (4) Impact-resistance

In an atmosphere of 23°C and RH=50%, stainless steel balls were dropped on test sheets of the hard coat film. The height at which 50% of the number (20) of the test sheets were damaged was obtained as "height of 50%-damage", and the impact-resistance of the hard coat film was evaluated thereby

The stainless steel balls include two kinds of balls, which include small balls having a diameter of 16.0 mmφ and a mass of 16.7 g, and large balls having a diameter of 20.0 mmφ and a mass of 20.0 g. Moreover, each test sheet was a hard coat film having a length and a width both being 50 mm. The support of the test sheet was an acryl plate of 5 mm thick with a hollow hole of 20 mm in diameter. The test sheet was placed on the support with its center coinciding with that of the hole, and was fixed at the left and right sides thereof by a cellophane tape. The stainless steel ball was repeatedly disposed above the center of the hole by a distance of 75 to 450 mm and dropped to measure the "height of 50%-damage", according to the measurement method (calculation method) described in JIS K7211.

### (5) Pencil Hardness

The pencil hardness of the hard coat film was measured according to JIS K5400 to evaluate the surface of the hard coat film.

### (6) Elastic Modulus

A Super Dumbbell Cutter (manufactured by Dumbbell Co. Ltd.; trade name: SDK-100D) was used to make five test sheets of the hard coat film each having a dumbbell shape no. 1, and a Strograph T (trade name, manufactured by Toyo Seiki Seisaku-Sho, Ltd.) was used to implement 5 cycles of a drawing test at the room temperature of 23°C and a drawing speed of 500 mm/min, wherein the tangent of the stress-strain curve was determined as the elastic modulus. The average of the elastic modulus values was then calculated to evaluate the hardness of the substrate film.

### [Example 1]

### (1) Preparation of Monomer Raw-Material of Substrate Film

In a reactor equipped with a cooling tube, a thermometer and a stirrer, 10 parts of polybutylene glycol dimethacrylate (Acryl Ester PBOM, produced by Mitsubishi Rayon Co., Ltd.) as a di(meth)acrylate (A-1), 90 parts of methyl methacrylate (Acryester M, produced by Mitsubishi Rayon Co., Ltd.) as a mono(meth)acrylate (B-1), and 0.4 part of *n*-octylmercaptane (NOM, produced by Elf Atochem Japan) as a chain transfer agent were loaded, and then the mixture was heated while being stirred.

While the temperature in the reactor reached 70°C, 0.026 part of 2,2'-azobis(2,4-dimethylvaleronitrile) (V65, produced by Wako Pure Chemical Industries, Ltd.) was added, and then the temperature in the reactor was raised to 80°C and maintained thereat for 60 min. After that, the temperature in the reactor was rapidly cooled to room temperature by a large amount of ice water, and a syrup-like material (c'-1) was obtained. The viscosity of the syrup-like material (c'-1) at 25°C was 185 cps. The result is shown in Table 1.

**Table 1**

| | | | Species of the syrup-like material | | |
|---|---|---|---|---|---|
| | | | c'-1 | c'-2 | c'-3 |
| Raw material (part) of the syrup-like material | di(meth)acrylate (A-1) | PBOM | 10 | 20 | - |
| | Mono(meth)acrylate (B-1) | MMA | 90 | 80 | 100 |
| | Chain transfer agent | NOM | 0.4 | 1 | - |
| | Thermo-polymerization initiator | V65 | 0.026 | 0.019 | 0.05 |
| Viscosity of the syrup (cps) | | | 185 | 235 | 1,100 |

Next, to 90 parts of the obtained syrup-like material (c'-1), the materials with the species and the amounts as shown in Table 2 were added, and then a degassing treatment was conducted under a reduced pressure to prepare a monomer raw-material (c-1) of a substrate film.

**Table 2**

| Material | Part |
|---|---|
| Syrup-like material (c'-1) | 90 |
| Acryl Ester PBOM (polybutylene glycol dimethacrylate with Mn of X being 648, produced by Mitsubishi Rayon Co. Ltd.) | 10 |
| Irgacure 184 (1-hydroxycyclohexyl phenyl ketone, produced by Ciba Japan) | 0.3 |
| SOLUSOL (registered trademark) 100% Cosmetic Grade Surfactant (sodium di(2-ethylhexyl) sulfosuccinate) produced by Nihon Cytec Industries Co., Ltd.) | 0.05 |
| JP-502 (a mixture of diethyl phosphate and monoethyl phosphate, produced by Johoku Chemical Co., Ltd.) | 0.05 |

### (2) Preparation of Active-energy-ray-curable Resin Composition (E-1)

An active-energy-ray-curable Resin Composition (E-1) containing the materials with the species and the amounts as shown in Table 3 was prepared.

**Table 3**

| Material | Compound Name or Trade Name | Part |
|---|---|---|
| Multi-Functional (meth)acryl compound (D-1) | TAS (trade name, trimethylolethane-acrylic acid-succinic anhydride condensed ester, produced by Osaka Organic Chemical Industry Ltd.) | 48.8 |
| | Viscoat #230 (trade name, 1,6-hexanediol diacrylate, produced by Osaka Organic Chemical Industry Ltd.) | 41.5 |
| | Aronix M-305 (trade name, pentaerythritol tri/tetraacrylate, produced by Toagosei Co. Ltd.) | 9.7 |
| Photo-polymerization Initiator | Irgacure 819 (trade name, phenylbis(2,4,6-trimethylbenzoyl)phosphine oxide, produced by Ciba Specialty Chemicals) | 0.2 |
| | Irgacure 184 (trade name, 1-hydroxycyclohexyl phenyl ketone, produced by Ciba Japan) | 4 |

### (3) Fabrication of Glass Plate Laminated with Hard Coating

The above active-energy-ray-curable resin composition (E-1) was coated on a glass plate, and a high-pressure mercury lamp was used to irradiate from the coated side at an intensity of 300 mW/cm² and a dose of 1,200 mJ/cm² to cure the active-energy-ray- curable resin composition (E-1). Thereby, a glass plate laminated with a hard coating of 7 *µ*m thick was fabricated.

### (4) Fabrication of Hard Coat Film

Another glass plate and the glass plate laminated with a hard coating were arranged oppositely such that the hard coating was at the inner side. Next, the edges of the opposite surfaces of the two opposite glass plates was sealed with a gasket of a soft polyvinyl chloride, with a distance of 500 *µ*m between the opposite glass plates, to fabricate a casting mould for casting polymerization. The above monomer raw-material (c-1) for forming a substrate film was injected in the casting mould, polymerized by a chemical lamp at an intensity of 2 mW/cm² and a dose of 3,600 mJ/cm², and further polymerized in an air oven of 130°C for 30 min to obtain a polymer-laminated object. After the casting mould was cooled, the glass plates were removed, and a hard coat film of 500 *µ*m thick laminated with a hard coating was obtained. The evaluation result of the hard coat film was shown in Table 4.

**Table 4**

| | | | | Example 1 | Example 2 | Example 3 | Example 4 | Example 5 | Comparative Example 1 | Comparative Example 2 |
|---|---|---|---|---|---|---|---|---|---|---|
| Species of the monomer raw-material of the substrate film | | | | c-1 | c-1 | c-1 | c-1 | c-2 | c-1 | c-3 |
| Composition of the monomer raw-material of the substrate film (part) | | Syrup-like material | | C'-1 | c'-1 | c'-1 | c'-1 | c'-2 | c'-1 | c'-3 |
| | | | | 90 | 90 | 78 | 78 | 50 | 78 | 68 |
| | | di(meth)acrylate (A-1) | | 10 | 10 | 22 | 22 | 50 | 22 | - |
| | | mono(meth)acrylate (B-1) | | - | - | - | - | - | - | 32 |
| Elastic modulus of the substrate film (MPa) | | | | 2,000 | 2,000 | 1,600 | 1,600 | 300 | 1,600 | - |
| Thickness of the hard coating (*µ*m) | | | | 7 | 15 | 7 | 15 | 15 | - | 7 |
| Thickness of the hard coat film (*µ*m) | | | | 500 | 500 | 500 | 500 | 500 | 500* | 500 |
| Evaluation result of the hard coat film | YI-value (-) | | | 0.56 | 0.61 | 0.59 | 0.56 | 0.54 | 0.54 | 0.56 |
| | Total light transmittance (%) | | | 92.2 | 92.2 | 92.2 | 92.3 | 92.1 | 92.5 | 92.2 |
| | Haze (%) | | | 0.07 | 0.15 | 0.17 | 0.04 | 0.69 | 0.07 | 0.02 |
| | Scratch resistance (%) | | | 0.12 | 0.08 | 0.03 | 0.08 | -0.28 | 31.93 | 0.08 |
| | Impact resistance (mm) | | Small ball | 450< | 450< | 450< | 450< | 450< | 450< | <75 |
| | | | Large ball | 327 | 349 | 450< | 450< | 333 | 332 | <75 |
| | Pencil hardness (-) | | | 2H | 3H | F | H | 5B | HB | 4H |

| | | | | | | | | | | |
|---|---|---|---|---|---|---|---|---|---|---|
| * Thickness of the film without a hard coating | | | | | | | | | | |

### [Examples 2-5 & Comparative Example 1]

A syrup-like material (c'-2) was prepared in the same way as in Example 1, except that the raw material of the syrup-like material was changed according to the conditions shown in Table 1. The syrup-like material shown in Table 1 was used, and the composition of the monomer raw-material of the substrate film and the thickness of the hard coating were changed according to the conditions shown in Table 4. In Comparative Example 1, a hard coating was not formed. The other conditions are the same as in Example 1, and respective hard coat films were obtained. The evaluation results of the respective hard coat films were shown in Table 4.

### [Comparative Example 2]

In a reactor equipped with a cooling tube, a thermometer and a stirrer, 100 parts of methyl methacrylate was loaded, and depressurization was conducted under -90 kPa for 10 min. Next, the pressure was returned to the atmospheric pressure by nitrogen gas, and heating was started. While the temperature in the reactor reached 80°C, 0.05 part of the thermo-polymerization initiator V65 was added, and then the inner temperature was raised to 100°C and maintained thereat for 9 min. After that, the inner temperature was cooled to room temperature through depressurization cooling. Thereafter, 0.003 part of 2,4-dimethyl-6-t-butylphenol as a polymerization inhibitor was mixed, and then a degassing treatment was conducted a reduced pressure to obtain a syrup-like material (c'-3). The polymerization ratio of the syrup-like material (c'-3) was about 20%. The viscosity of the syrup-like material (c'-3) at 25°C was about 1,100cps. The result is shown in Table 1.

The syrup-like material (c'-3) was used in the same way as in Example 1 to obtain a hard coat film, except that the composition of the monomer raw-material of the substrate film was changed according to the conditions shown in Table 4. The evaluation result of the obtained hard coat film was shown in Table 4.

### [Conclusion of Evaluation Results]

It is clear from Examples 1-5 that the hard coat film of this invention is good in transparency, scratch-resistance and impact-resistance. On the other hand, it is clear from Comparative Example 1 that a substrate film not laminated with a hard coating has a poor scratch-resistance. Moreover, it is clear from Comparative Example 2 that when the polymer for forming the substrate film contains no di(meth)acrylate (A) unit, the impact resistance of the obtained hard coat film is remarkably lowered.

### Industrial Applicability

The hard coating film is useful as optical films, such as films used for various display elements and touch panel films of personal data assistants and so on, and is useful as the front protection sheets of various display elements, personal data assistants and so on.

## Claims

1. A hard coat film, being formed by steps comprising: laminating a hard coating on at least one surface of a substrate film, wherein the substrate film comprises a polymer (C) including a first repeating unit derived from a di(meth)acrylate (A) and a second repeating unit derived from a mono(meth)acrylate (B), and the first repeating unit derived from the di(meth)acrylate (A) is represented by formula (1): 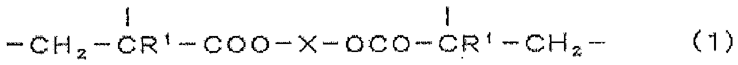 wherein X represents at least one diol residue with a number-average molecular weight of 500 or more selected from polyalkylene glycol residues, polyester diol residues and polycarbonate diol residues, and R¹ represents H or CH₃.

2. The hard coat film of claim 1, wherein the hard coating is formed by curing an active-energy-ray-curable resin composition (E) that comprises: a multi-functional (meth)acryl compound (D) having two or more (meth)acryloyl groups in one molecule, and a photo-polymerization initiator.

3. The hard coat film of claim 1, wherein a thickness of the hard coating ranges from 1 µm to 20 µm.

4. The hard coat film of claim 2, wherein a thickness of the hard coating ranges from 1 µm to 20 µm.

5. The hard coat film of claim 1, wherein the polymer (C) is formed from a monomer raw-material (c) that is a syrup-like material (c') formed by dissolving, in a first monomer mixture containing the di(meth)acrylate (A) and the mono(meth)acrylate (B), a copolymer formed by polymerizing a part of a second monomer mixture having the same composition as the first monomer mixture.

6. The hard coat film of claim 5, wherein a viscosity of the syrup-like material (c') ranges from 100 mPa·s to 8000 mPa·s.

7. The hard coat film of any one of claims 1-6, which has a thickness ranging from 50 µm to 500 µm.

8. A front protective sheet comprising the hard coat film of claim 1.
